# EUROPEAN PATENT SPECIFICATION

(11) **EP 0 796 806 B1**
(45) Date of publication and mention of the grant of the patent: **07.11.2001**
(21) Application number: 97301901.1
(22) Date of filing: 20.03.1997
(51) Int. Cl.: B65G 17/08

(54) **Chain belts for conveyors**
Kettenband für Förderer
Courroies à chaîne pour convoyeur

(30) Priority: 22.03.1996 GB 9606102
(43) Date of publication of application: 24.09.1997
(73) Proprietor: Sigma Industries Limited, Redditch, Worcestershire B97 5XP (GB)
(72) Inventor: Anson, Jonathan Richard, Kings Norton, Birmingham, B38 8BG (GB)
(74) Representative: Lawrence, John

(56) References cited:
- EP-A- 0 795 496
- US-A- 4 153 152
- US-A- 5 573 106

## Description

Conveyor belts of chain construction, formed from interlinked moulded plastics belt elements, are used in the food industries. Each belt element comprises two radially-spaced parallel sets of spaced co-axial collars, the axial spacing of the collars in each set being similar to the collar widths whereby the collar sets of adjacent elements can be intercalated and a connecting pin introduced through the two axially aligned sets to retain the elements pivotally joined. Such a construction is referred to hereinafter as chain belt of the kind referred to.

An example of a chain belt of the kind referred to is disclosed in US-A-4 153 152.

The connecting pins of chain belt of the kind referred to are commonly secured (at at least one end) by means of end locks comprising separate plastics locking pieces which are inserted after the rods have been introduced. The endmost collars of each belt element (being one from each collar set) may be cut away and formed to receive a snap-fitting end lock. However, there is a danger that separate locking pieces may come out in use of the belt and this, particularly in the food industries, can be unacceptable.

Alternatively, connecting pins are sometimes secured by deformation of an end portion of the pin after insertion. However, this is an awkward and inefficient assembly process.

There is also disclosed in EP-A-0 795 496 a conveyor belt in which plastics elements are interconnected by connecting rods. Each connecting rod has a conically enlarged co-axial head which is divided diametrically into two opposed resilient barbs which snap, by relative radially inward deflection, through an end eye of meshing adjacent belt elements to retain the rod in engagement with the elements.

It is an object of the present invention to provide an improved method of constructing chain belt of the kind referred to.

In one of its aspects the invention provides a method of constructing chain belt comprising a plurality of moulded plastics belt elements which are pivotally interconnected by means of connecting pins which extend through intercalated hinge collars of adjacent elements, the method in respect of each interconnection being characterised by procuring a connecting pin having a head portion which is of substantially similar transverse dimensions to and off-set radially from a body of the pin and inserting the body of the pin through the intercalated collars of the adjacent elements in order to link the elements together, a temporary resilient deformation from a relaxed condition between the head portion and adjacent retaining portion of one of the chain elements being effected to permit the head portion to be moved past the retaining portion during a final stage of insertion of the pin whereby accidental withdrawal of the pin is thereafter prevented by the retaining portion in the relaxed condition.

By means of such an arrangement, there is no need for a separate end-locking piece or for deformation of the pin after assembly, the head portion and the belt elements being suitably arranged for the pin to be snap-fitted into final position.

The method may include the step of deforming an end portion of a length of rod to form said head portion of said pin, the body of the pin being formed by the rod. The rod may be of cylindrical form.

One of the belt elements may comprise an end ring which comprises the retaining portion, the head portion of the pin being passed right through the end ring in completion of the interconnection.

There now follows a description, to be read with reference to the accompanying drawings, of two embodiments of chain belt and a method of constructing such belt which illustrates the invention by way of example.

In the drawings:
**Figure 1** is a top plan view of an end portion of one belt element of a first chain belt;
**Figure 2** is a view of the element in the direction of arrow "A" in Figure 1;
**Figure 3** is a view of the underside of the element;
**Figure 4** is a view in perspective of the underside of a second chain belt; and
**Figure 5** is a view in perspective illustrating securement of a connecting pin in a chain belt.

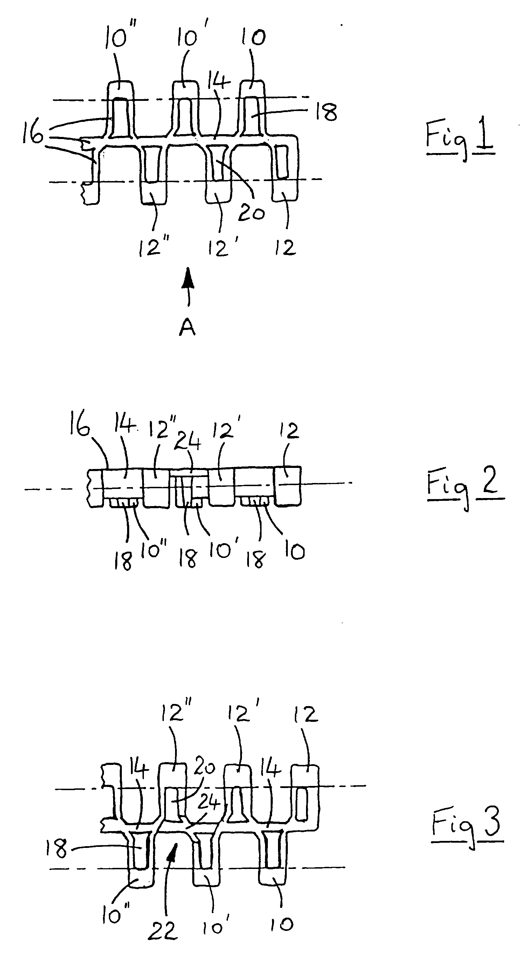

A conveyor belt is formed from a plurality of identical interlinked belt elements (Figures 1,2 and 3) each moulded of a suitable plastics material.

Each element comprises two radially-spaced parallel sets of axially spaced co-axial hinge collars 10,10',10",12,12',12". The axial spacing of the collars in each set is similar to (though slightly greater than) the axial collar widths of the other set, whereby the collar sets of adjacent elements can be intercalated. A plastics connecting pin (not shown in Figures 1 to 3) when introduced through the two axially aligned intercalated sets retains the elements pivotally joined.

Each element comprises a central web 14 on to which the two sets of collars 10,12 are mounted (projecting to opposite sides of the web). Except as hereinafter described, the web extends downwards from an upper generally flat surface 16 of the element for almost the whole of the depth of the element; the upper surface 16 is presented by a top edge of the web and top surfaces of portions projecting from the web and forming the collars.

Slots 18,20 in the collars of the two sets form openings which extend radially through the collars adjacent to the central web 14; in the direction away from the web, the slots penetrate the collars approximately to the axial centre lines of the collars.

Whilst the slots 18,20 can be engaged by fine teeth of a sprocket wheel for driving the belt, pockets 22 (one only shown) are formed in the underside of the chain element for reception of a more substantial driving tooth.

The pockets are presented at spaced locations along the central web 14 by portions 24 of the web of reduced depth. The web is reduced in each location for no more than the axial width of two successive collars 10',12" (Figure 3), one collar being in each of the two sets.

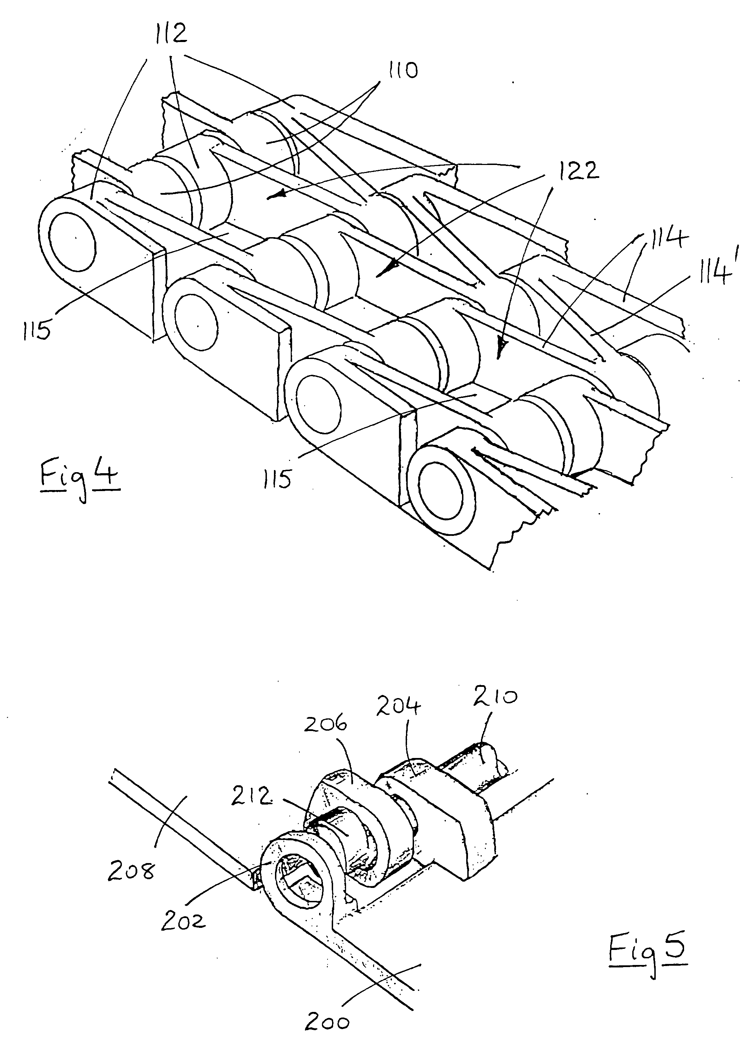

A second embodiment of the invention is illustrated by Figure 4. In this second embodiment, hinge collars 110,112 of each plastics belt element are interconnected by pairs of struts 114,114' and a continuous plate 115 providing a flat upper surface of the belt. At spaced intervals along the length of each element, one strut 114' is omitted to form a pocket 122 for reception of a driving tooth of a sprocket wheel for driving the belt. The width of the pocket in the axial direction is greater than the axial length of the collars 110,112, being nearly twice the collar length.

There is shown in Figure 5 an end portion of a connecting pin linking two elements of a chain belt, the pin being retained without the use of a separate locking piece and without deformation of the pin after assembly. One plastics belt element 200 comprises an end ring 202 which is coaxially aligned with hinge collars 204 of the element. An end collar 206 of a second element 208 is fitted between the end ring and the first collar, the three being axially aligned.

In constructing the assembly a piece of plain cylindrical plastics rod is cut to length to form the pin and an end portion deformed to provide an eccentric head portion 212 of the pin, the body 210 of the pin being formed by the rod. An opposite end of the pin is inserted through the end ring 202 and the two collars 204,206 successively, and through remaining intercalated collars of the two elements (not shown). The head portion 212 is radially offset from the cylindrical body of the pin. During a final stage of insertion of the pin, to secure the pin, the head portion 212 is snap-fittingly forced through the end ring 202 (relying upon some temporary resilient deformation of the structure) and becomes accommodated between the end ring 202 and the end collar 206. When the pin has been fully inserted, the structure relaxes so that the head portion becomes out of alignment with the end ring and the pin is so retained in place by the end ring, accidental withdrawal of the pin thereafter being prevented by the retaining portion formed by the end ring.

## Claims

1. A method of constructing chain belt comprising a plurality of moulded plastics belt elements which are pivotally interconnected by means of connecting pins which extend through intercalated hinge collars (204, 206) of adjacent elements, the method in respect of each interconnection being **characterised by** procuring a connecting pin having a head portion (212) which is of substantially similar transverse dimensions to and is off-set radially from a body (210) of the pin and inserting the body of the pin through the intercalated collars (204, 206) of the adjacent elements in order to link the elements together, a temporary resilient deformation from a relaxed condition between the head portion (212) and an adjacent retaining portion (202) of one of the chain elements being effected to permit the head portion to be moved past the retaining portion during a final stage of insertion of the pin whereby accidental withdrawal of the pin is thereafter prevented by the retaining portion in the relaxed condition.

2. A method according to claim 1 **characterised in that** it comprises the step of deforming an end portion of a length of rod to form said head portion (212) of said pin, the body (210) of the pin being formed by the rod.

3. A method according to either of claims 1 and 2 **characterised in that** one of the belt elements comprises an end ring (202) which comprises said retaining portion, the head portion (212) of the pin being passed through the end ring in completion of the interconnection.

4. Chain belt **characterised in that** it is constructed by a method according to any one of claims 1 to 3.

## Patentansprüche

1. Verfahren zur Erstellung eines Kettenbandes aus mehreren als Runststofformteile ausgebildeten Bandelementen, die schwenkbar mit Hilfe von Verbindungsbolzen miteinander verbunden sind, die sich durch ineinandergreifende Gelenkkragen (204,206) einander benachbarter Elemente hindurch erstrecken, **dadurch gekennzeichnet, daß** bei jeder Verbindung ein Verbindungsbolzen mit einem Kopfteil (212) bereitgestellt wird, der im wesentlichen gleiche Querabmessungen wie der Schaft (210) des Bolzens aufweist jedoch gegenüber diesem radial versetzt ist, daß der Schaft des Bolzens durch die nebeneinander auf gleiche Höhe gebrachten Kragen (204,206) der einander benachbarten Elemente eingeführt wird, um diese gelenkig miteinander zu verbinden, wobei eine vorübergehende nachgiebige Verformung aus einem entspannten Zustand zwischen dem Kopfteil (212) und einem benachbarten Rückhalteteil (202) eines der Kettenelemente herbeigeführt wird, um das Kopfteil während der Endphase der Einführung auf die andere Seite des Rückhalteteils zu bringen, wodurch eine anschließende ungewollte Zurückbewegung des Bolzens durch das Rückhalteteil in seinem entspannten Zustand verhindert wird.

2. Verfahren nach Anspruch 1, **dadurch gekennzeichnet, daß** es den Schritt der Verformung eines Endteils der Länge einer Stange umfaßt, um den Kopfteil (212) des Bolzens zu formen, wobei der Schaft (210) des Bolzens durch die Stange gebildet wird.

3. Verfahren nach Anspruch 1 oder 2, **dadurch gekennzeichnet, daß** eines der Bandelemente einen Endring (202) umfaßt, welcher den Halteteil bildet, wobei der Kopfteil (212) des Bolzens durch den Endring bei der Fertigstellung der Verbindung hindurchgeführt wird.

4. Kettenband, **dadurch gekennzeichnet, daß** es durch ein Verfahren nach einem der Ansprüche 1 bis 3 erstellt ist.

## Revendications

1. Procédé de fabrication d'une courroie articulée comprenant une pluralité d'éléments de courroie en plastique moulés qui sont interconnectés de manière pivotante au moyen de broches de raccordement qui s'étendent à travers des colliers de pivot intercalés (204, 206) des éléments adjacents, le procédé à l'égard de chaque interconnexion étant **caractérisé par** le fait de prévoir une broche de raccordement ayant une partie de tête (212) qui présente des dimensions transversales sensiblement similaires à celles d'un corps (210) de la broche et qui se trouve décalé de manière radiale par rapport audit corps (210) de la broche, et d'insérer le corps de la broche à travers les colliers intercalés (204, 206) des éléments adjacents afin de relier les éléments les uns aux autres, une déformation élastique temporaire à partir d'un état détendu entre la partie de tête (212) et une partie de retenue adjacente (202) de l'un des éléments de la chaîne étant formée afin de permettre à la partie de tête d'être déplacée au-delà de la partie de retenue pendant une étape finale d'insertion de la broche, moyennant quoi le retrait accidentel de la broche est empêché par la suite grâce à la partie de retenue dans l'état détendu.

2. Procédé selon la revendication 1, **caractérisé en ce qu'**il comprend l'étape consistant à déformer une partie d'extrémité d'une longueur de tige afin de former ladite partie de tête (212) de ladite broche, le corps (210) de la broche étant formé par la tige.

3. Procédé selon l'une quelconque des revendications 1 et 2, **caractérisé en ce que** l'un des éléments de courroie comprend un anneau d'extrémité (202) qui comprend ladite partie de retenue, la partie de tête (212) de la broche étant passée à travers l'anneau d'extrémité pour achever l'interconnexion.

4. Courroie articulée **caractérisée en ce qu'**elle est réalisée par un procédé selon l'une quelconque des revendications 1 à 3.
